# FASCICULE DE BREVET EUROPEEN

(11) **EP 3 436 685 B1**
(45) Date de publication et mention de la délivrance du brevet: **12.05.2021**
(21) Numéro de dépôt: 17716578.4
(22) Date de dépôt: 23.03.2017
(51) Int. Cl.: F02N 11/04, F02N 15/08, F02B 67/06, F16H 9/26, B60W 30/194, F02N 11/08

(54) **STRATÉGIE DE DÉMARRAGE PAR TEMPS FROID AVEC UN ALTERNO-DEMARREUR DANS UN VÉHICULE POURVU D'UNE COURROIE ENTRAÎNÉE PAR UN MOTEUR À COMBUSTION INTERNE**
ANLASSSTRATEGIE BEI KALTEM WETTER MIT EINEM STARTER-GENERATOR IN EINEM MIT EINEM MOTORBETRIEBENEN RIEMEN AUSGESTATTETEN FAHRZEUG
COLD WEATHER START STRATEGY WITH A STARTER-GENERATOR IN A VEHICLE PROVIDED WITH A BELT DRIVEN BY AN INTERNAL COMBUSTION ENGINE

(30) Priorité: 30.03.2016 FR 1652750
(43) Date de publication de la demande: 06.02.2019
(73) Titulaire: Renault S.A.S., 92100 Boulogne-Billancourt (FR); NISSAN MOTOR CO., LTD., Yokohama-shi, Kanagawa 221-0023 (JP)
(72) Inventeur: MILLON, Jean-Pierre, 78870 Bailly (FR); DER MATHEOSSIAN, Jean-Yves, 75005 Paris (FR)
(74) Mandataire: Rougemont, Bernard
(86) Numéro de dépôt international: PCT/FR2017/050674
(87) Numéro de publication internationale: WO 2017/168075

(56) Documents cités:
- EP-A1- 1 496 216
- EP-A1- 1 724 465
- EP-A2- 1 760 297
- WO-A1-01/88369
- DE-U1-202016 100 742
- FR-A1- 2 955 806
- US-A1- 2009 212 569

## Description

### Domaine technique de l'invention

La présente invention concerne un groupe motopropulseur de véhicule automobile.

La présente invention concerne plus particulièrement un groupe motopropulseur comportant un système de transmission avec un alterno-démarreur. Elle s'applique de façon non limitative, aux systèmes Stop Start.

La présente invention concerne une stratégie de démarrage du groupe motopropulseur avec alterno-démarreur lors des temps froids.

### Etat de la technique

Les groupes motopropulseurs de véhicules automobiles comportent des systèmes automatiques d'arrêt et de redémarrage automatiques du moteur en cas d'arrêt temporaire du véhicule afin de diminuer les consommations du moteur. En effet, lesdits systèmes permettent un arrêt du moteur lorsque le véhicule est à l'arrêt pendant au moins un seuil de durée, ou à lorsque le véhicule se déplace à très faible vitesse en décélération pendant au moins un seuil de durée. Le redémarrage du moteur arrêté automatiquement est déclenché ensuite par exemple par un appui ou un relâchement sur une pédale de commande.

Il est connu de tels systèmes qui utilisent actuellement un alterno-démarreur avec un démarreur. La particularité de l'alterno-démarreur réside dans sa capacité à démarrer le moteur, et à produire l'électricité nécessaire à bord du véhicule à partir de la rotation du moteur.

Le démarreur permet de démarrer le moteur à froid et l'alterno-démarreur permet de démarrer le moteur quand il est chaud dans les phases de démarrage automatique consécutives de phases d'arrêt automatique.

Des solutions visent à supprimer le démarreur en assurant des rapports d'entraînement entre le moteur thermique et l'alterno-démarreur qui permettent de transmettre le couple nécessaire pour le démarrage à froid sans pénaliser ensuite le mode générateur d'énergie électrique.

La publication FR3012194-A1 divulgue un système de transmission comprenant un bloc moteur à combustion interne équipé d'un arbre d'entraînement s'étendant selon un axe longitudinal, un alterno-démarreur relié en rotation à l'arbre d'entraînement, une première poulie disposée selon l'axe longitudinal de l'arbre d'entraînement et montée libre en rotation sur l'arbre d'entraînement, une poulie d'entraînement de l'alterno-démarreur et reliée à la première poulie par une courroie. Le petit rapport d'entrainement entre la poulie de l'alterno-démarreur et la première poulie permet d'entraîner le moteur à un régime très inférieur à celui de l'alterno-démarreur, ce qui permet de réaliser un couple d'entraînement important pour l'arbre d'entraînement et de vaincre les frottements importants à des basses températures.

Un inconvénient de ce système est la présence sur la courroie d'impuretés et de glace ou de givre lors de basses températures qui peut entrainer alors un glissement de ladite courroie lors d'une phase de démarrage du moteur thermique. Ceci rend impossible un démarrage par grand froid avec un alterno-démarreur. Cette difficulté est particulièrement importante avec un moteur à fort taux de compression comme un moteur Diesel, parce que ce taux élevé nécessite un couple d'entraînement élevé pour démarrer le moteur.

La demande de brevet WO 01/88369 A divulgue une stratégie de démarrage telle que définie dans le préambule de la revendication 1.

### Bref résumé de l'invention

Le but de l'invention est de remédier à ces problèmes et un des objets de l'invention est une stratégie de démarrage d'un groupe motopropulseur de véhicule automobile, telle que définie par la revendication 1, comprenant un bloc moteur à combustion interne équipé d'un arbre d'entraînement s'étendant selon un axe longitudinal, un alterno-démarreur relié en rotation à l'arbre d'entraînement, une première poulie mobile en rotation autour de l'axe longitudinal de l'arbre d'entraînement, une poulie fixée solidaire en rotation de l'alterno-démarreur et reliée à la première poulie par une courroie et un système de couplage/découplage entre la première poulie et l'arbre d'entrainement du moteur.

La présente invention concerne plus particulièrement une stratégie de démarrage dudit groupe motopropulseur avec l'alterno-démarreur caractérisé en ce que le démarrage comprend une phase de préparation de la courroie par temps froids avant le démarrage du moteur.

Selon l'invention, le démarrage dudit groupe motopropulseur avec l'alterno-démarreur comprend une phase de préparation de la courroie pour nettoyer ladite courroie des impuretés telles le givre, la glace ou des poussières et ainsi assurer d'une part un meilleur contact entre la courroie et les poulies et d'autre part une mise en condition de fonctionnement de ladite courroie.

Selon l'invention, la phase de nettoyage comprend un entrainement de la courroie par l'alterno-démarreur.

Selon l'invention, l'alterno-démarreur est actionné pour entrainer la courroie en rotation pendant la phase de nettoyage sans solliciter le bloc moteur thermique. Ladite courroie lors de sa rotation peut se débarrasser des impuretés telles que poussières, givre ou glace et être amenée à une température sensiblement proche d'un seuil de température minimal de fonctionnement.

Selon l'invention, la phase de nettoyage comprend un désaccouplement de la première poulie fixée à l'arbre d'entrainement.

Selon l'invention, la phase de nettoyage comprend un désaccouplement de la première poulie de l'arbre d'entrainement du moteur, ce qui permet une diminution des efforts de frottements et de résistance de la première poulie et un fonctionnement de l'alterno-démarreur plus aisé pour entrainer la courroie.

Selon d'autres caractéristiques de l'invention,
-la phase de nettoyage est précédée par une phase de vérification de conditions de préparation de la courroie.

De manière avantageuse, la phase de nettoyage est lancée lorsque des conditions de basses températures sont relevées qui peuvent engendrer des formations de givre ou de glace sur la courroie entrainant des difficultés de démarrer le moteur thermique à l'aide de l'alterno-démarreur, afin de préserver au mieux l'énergie électrique et d'optimiser les consommations du groupe motopropulseur. La phase de préparation de la courroie est également lancée si aucune phase de préparation antérieure de courroie n'a déjà été lancée dans un écart de temps inférieur à un seuil de durée.
- la phase de nettoyage est suivie d'une phase de temporisation.

De manière avantageuse, la phase de nettoyage est suivie d'une phase de temporisation pour préparer le démarrage du moteur à l'aide de l'alterno-démarreur.
- la phase de temporisation comprend un accouplement de la courroie, de la première poulie fixée à l'arbre d'entrainement et de la poulie de l'alterno-démarreur.

De manière avantageuse, la phase de temporisation comprend une étape de réaccouplement de la première poulie, de la poulie de l'alterno-démarreur et de la courroie avant de pouvoir démarrer le moteur à l'aide de l'alternodémarreur.
- la phase de temporisation comprend un arrêt du fonctionnement de l'alterno-démarreur.

De manière avantageuse, lors de la phase de temporisation, l'alterno-démarreur est arrêté avant l'étape de ré-accouplement des poulies et de la courroie.
- la phase de temporisation comprend une procédure d'information affichée au tableau de bord du véhicule.

De manière avantageuse, la phase de temporisation peut comprendre une procédure d'information à l'encontre du conducteur et affichée au tableau de bord du véhicule. De cette manière, le conducteur peut se préparer au démarrage du moteur et du véhicule.
- la phase de temporisation précède une phase de démarrage du moteur grâce à l'alterno-démarreur.

De manière avantageuse, la phase de temporisation est comprise entre la phase de nettoyage et le démarrage du moteur. Les phases de nettoyage et de temporisation peuvent ainsi être lancées avant l'arrivée du conducteur devant le volant du véhicule, par exemple à l'ouverture des portes.

### Brève description des figures

D'autres caractéristiques et avantages de l'invention apparaîtront à la lecture de la description qui suit de modes particuliers de réalisation de l'invention donnés à titre d'exemples non limitatifs et représentés sur les dessins annexés, dans lesquels :
- la figure 1 représente de façon schématique un groupe motopropulseur équipé d'un alterno-démarreur.
- la figure 2 représente un logigramme des phases avant le démarrage du moteur,
- la figure 3 représente un logigramme des différentes étapes de la phase de vérification.
- la figure 4 représente un logigramme des différentes étapes de la phase de nettoyage.

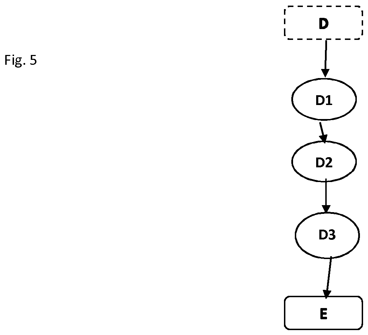

- la figure 5 représente un logigramme des différentes fonctions de la phase de temporisation.

### Description détaillée des figures

Dans la description qui va suivre, des chiffres de référence identiques désignent des pièces identiques ou ayant des fonctions similaires.

Les groupes motopropulseurs thermiques de véhicule automobile comprennent un bloc moteur à combustion interne avec un démarreur et éventuellement un alterno-démarreur pour par exemple les groupes motopropulseurs comportant la fonction d'arrêt et de redémarrage automatique.

La particularité de l'alterno-démarreur réside dans sa capacité à remplir les fonctions de deux organes actuellement distincts : le démarreur - habituellement placé sur la couronne du moteur et chargé, comme son nom l'indique, du démarrage moteur - et l'alternateur, fixé en périphérie du moteur, dont le rôle consiste à produire l'électricité nécessaire à bord du véhicule à partir de la rotation du moteur. Dans la nouvelle configuration, ces deux éléments sont remplacés par un seul, remplissant les deux fonctions. L'alterno-démarreur est en fait un alternateur modifié pour pouvoir faire office de démarreur en plus de sa fonction originelle.

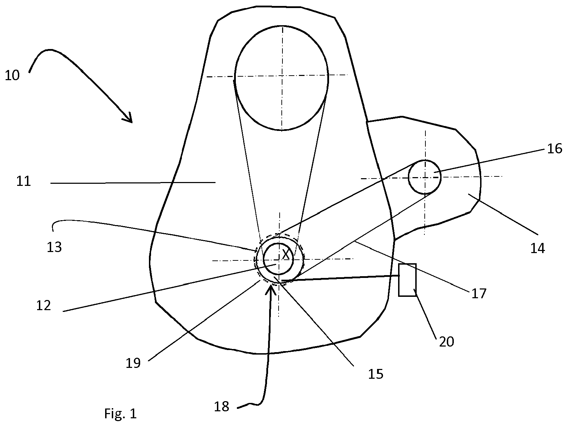

Monté sur le moteur en lieu et place de l'alternateur conventionnel, l'alterno-démarreur est, comme ce dernier, entraîné via une courroie par le moteur comme représenté dans la figure 1. L'alterno-démarreur comporte un arbre de rotation parallèle à l'axe longitudinal du moteur et de l'arbre d'entrainement du moteur, lesdits arbres comportant à une même extrémité des poulies coplanaires entourées par la courroie. L'alterno-démarreur agit comme générateur d'électricité, sur le même principe qu'une dynamo de vélo. Mais sa caractéristique est de pouvoir fonctionner en mode réversible : alimenté par la batterie il fait alors office de moteur électrique pour démarrer le moteur, via la même courroie. L'avantage de l'alterno-démarreur ne réside pas tant dans la réduction du nombre de composants que dans les performances qui en résultent. Le démarrage du moteur est beaucoup plus rapide qu'avec un démarreur classique.

Grâce à la transmission par la courroie, striée et à base de caoutchouc, l'opération est de surcroît très silencieuse. Dans un démarreur classique, l'entraînement se fait en effet par un pignon métallique qui entraîne une couronne métallique, source des bruits caractéristiques du démarrage des moteurs. Ces deux avantages rendent les redémarrages du moteur pratiquement imperceptibles pour les occupants du véhicule.

Le démarreur est généralement agencé en partie haute du moteur afin de le préserver des contacts avec l'eau par exemple lors d'inondations et de passages de gué. En effet, pour pouvoir redémarrer un véhicule bloqué en milieu de gué, il convient que le démarreur soit agencé à un emplacement non atteint par le niveau d'eau. Selon de nouvelles contraintes d'architecture du groupe motopropulseur notamment dictées par l'agencement de pompe d'alimentation de carburant haute pression en partie haute du moteur, la disposition dudit démarreur en partie haute du moteur n'est plus possible.

Il convient alors de supprimer le démarreur en assurant des rapports d'entraînement entre le moteur thermique et l'alterno-démarreur qui permettent de transmettre le couple nécessaire pour le démarrage sans pénaliser ensuite le mode générateur d'énergie électrique, notamment pour des démarrages à froid dans des conditions de grand froid.

De manière connue, l'utilisation d'un alterno-démarreur en tant que démarreur pose des problèmes par grand froid, typiquement des températures extérieures au véhicule T° inférieures à -20°C, lorsque le givre est déposé ou que la glace est formée sur la courroie d'entraînement des accessoires. Ledit givre ou ladite glace est susceptible de provoquer un glissement de la courroie en phase de démarrage du moteur thermique sur les poulies coplanaires fixées solidaires de l'alterno-démarreur et de l'arbre d'entrainement du moteur, ce qui peut entrainer un démarrage très difficile voire impossible par grand froid avec ledit alterno-démarreur. Cette difficulté est particulièrement importante avec un moteur à fort taux de compression comme un moteur Diesel, parce que ce taux élevé nécessite un couple d'entraînement élevé pour démarrer le moteur.

Des poussières peuvent également se déposer sur ladite courroie et entrainer aussi des glissements de ladite courroie.

Selon l'invention, un groupe motopropulseur thermique 10 de véhicule automobile comprend un moteur à combustion interne 11 comportant un vilebrequin prolongé à une extrémité 13 par un arbre d'entraînement 12 s'étendant selon un axe longitudinal X du moteur, un alterno-démarreur 14 relié en rotation à l'arbre d'entraînement, une première poulie d'entraînement 15 montée mobile en rotation autour de l'axe longitudinal X et apte à être entrainée en rotation par l'arbre d'entraînement, une poulie 16 de l'alterno-démarreur fixée solidaire en rotation de l'arbre de l'alterno-démarreur, et reliée à la première poulie par une courroie 17, et un système de couplage/découplage 18 entre la première poulie 15 et l'arbre d'entrainement du moteur. Ladite courroie entoure ainsi la première poulie 15 fixée à une extrémité de l'arbre d'entrainement du vilebrequin à une extrémité dudit vilebrequin et la poulie 16 de l'alterno-démarreur 14.

Selon l'invention, le système de couplage/découplage 18 de la première poulie 15 à l'extrémité du vilebrequin, avec la poulie 16 de l'alterno-démarreur et la courroie 17 peut comprendre une poulie débrayable 19. Ladite poulie débrayable 19 est disposée à l'extrémité de l'arbre d'entrainement en place de la première poulie 15 du vilebrequin. Selon l'invention, la courroie 17 entoure la poulie 16 de l'alterno-démarreur et la poulie débrayable 19 fixée à l'extrémité de l'arbre d'entrainement du vilebrequin. Le système de couplage/découplage permet un entrainement de la courroie selon deux modes :
- en mode découplé, sans avoir à fournir des efforts importants en interrompant la liaison entre la première poulie débrayage 19 et l'arbre d'entrainement 12 du moteur, ladite poulie débrayable n'est alors pas solidaire en rotation avec l'arbre d'entrainement du vilebrequin. L'alterno-démarreur 14 est actionné en mode démarreur ou entrainant pour entrainer en rotation via la poulie de l'alterno-démarreur la courroie et la première poulie 19 alors débrayée qui présente une faible résistance voire nulle à la rotation.
- en mode couplé où la première poulie débrayable 19 est solidaire en rotation avec l'arbre d'entrainement du vilebrequin. De manière connue, l'alterno-démarreur peut alors être activé en tant que démarreur pour entrainer l'arbre d'entrainement 12 du vilebrequin ou pour fournir un supplément de couple au moteur 11, ou en tant qu'alternateur pour générer de l'énergie électrique, l'arbre de l'alterno-démarreur étant entrainé en rotation alors par l'arbre d'entrainement du vilebrequin. En fonctionnement normal qui est le mode couplé, la première poulie 19 est solidaire en rotation avec l'arbre d'entrainement du moteur et elle est liée avec la poulie 16 de l'alterno-démarreur 14 et la courroie 17: de ce fait, la première poulie 19 entrainée en rotation par l'arbre d'entrainement 12 du moteur 11 peut alors entrainer en rotation la poulie de l'alterno-démarreur 14 qui fonctionne alors tel un alternateur, ou la poulie 16 de l'alterno-démarreur peut entrainer la première poulie d'entrainement et l'arbre d'entrainement du moteur lors des démarrages du moteur thermique 11, ledit alterno-démarreur 14 fonctionnant alors tel un démarreur.

Lors de conditions de grands froids, pour avoir de bonnes conditions de démarrage, le système de couplage/découplage 18 est activé pour se positionner en mode découplé. L'arbre d'entrainement 12 du vilebrequin n'est alors plus relié ni à la première poulie débrayable 19 ni à l'alterno-démarreur 14. Ledit alterno-démarreur peut alors être lancé pour entrainer en rotation la courroie 17. Lors de ce fonctionnement, les résistances à la rotation sont faibles et l'alterno-démarreur agissant comme machine tournante entrainante consomme peu d'énergie pour entrainer en rotation la courroie seule et la première poulie débrayable 19 en roue libre. La vitesse de rotation est sensiblement importante pour d'une part débarrasser ladite courroie des impuretés telles que le givre, la glace ou les poussières et d'autre part permettre une montée en température de cette courroie pour atteindre un seuil minimal de température de fonctionnement. La température de la courroie peut être mesurée par des moyens de mesure ou estimée en fonction par exemple d'une durée de rotation suite à une série de mesures de validation. Ensuite, le système de couplage/découplage 18 permet le ré-accouplement de la première poulie d'entrainement 19 avec l'arbre d'entrainement du moteur pour retourner à un fonctionnement normal, de manière préférentielle après un arrêt de l'alterno-démarreur.

Selon un mode de réalisation non représenté, la première poulie 19 débrayable est tenue à l'extrémité d'un arbre intermédiaire qui porte au moins une dent. Ladite dent est partie d'un pignon et ledit arbre intermédiaire est lié en rotation avec l'arbre d'entrainement 12 du moteur par une roue dentée qui égrène le pignon. La courroie 17 entoure donc la première poulie débrayable 19 et la poulie de l'alterno-démarreur 14.

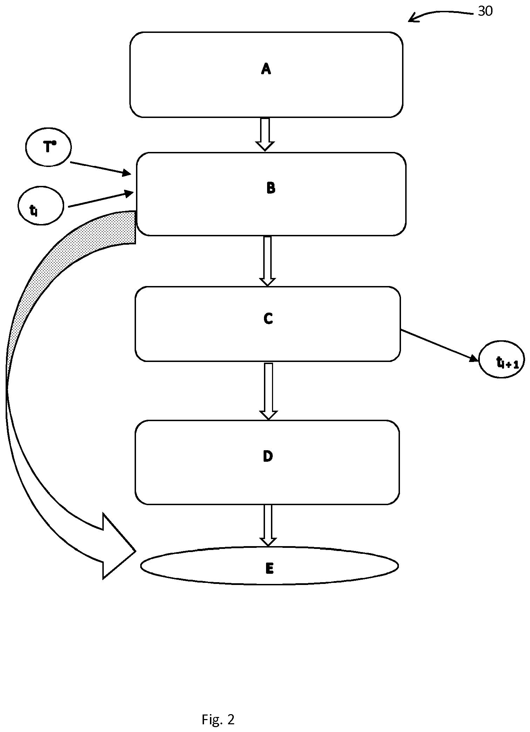

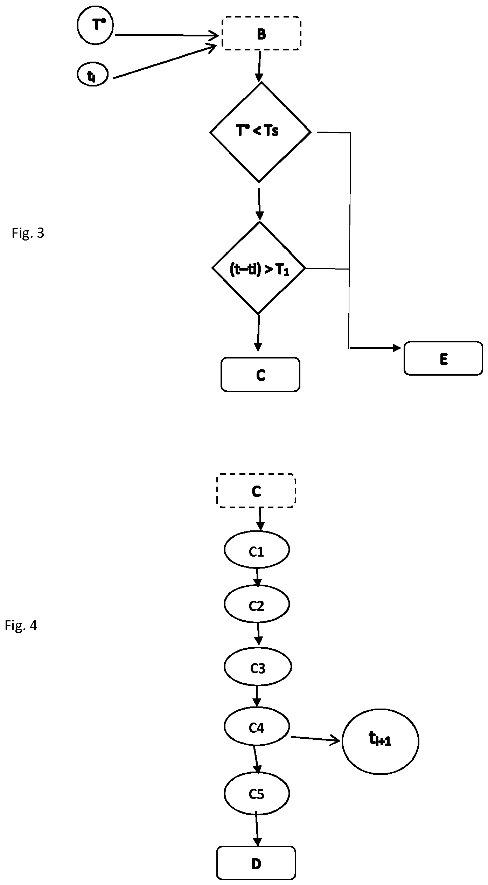

Selon l'invention, ainsi que représenté dans la figure 2, le démarrage dudit groupe motopropulseur comprend une procédure de préparation 30 de la courroie avec les différentes phases suivantes :
a. Une première phase A de lancement du processus de démarrage du groupe motopropulseur. Cette première phase A peut être déclenchée de différentes manières : par exemple à l'ouverture des portes après un arrêt de longue durée du véhicule (la durée peut être de l'ordre d'une heure), ou au positionnement du conducteur sur le siège conducteur, ou au signal de demande de démarrage du moteur.
b. Une deuxième phase B de vérifications des conditions de déclenchement de la procédure de préparation de démarrage du moteur thermique. La phase de vérification prend en compte des températures extérieures froides. On entend par températures froides des températures inférieures à un seuil minimal de température Tₛ au moins de -10°C par exemple. La température extérieure peut être évaluée par une sonde de température extérieure qui est un équipement présent de manière connue dans un véhicule automobile. La valeur de la température extérieure est adressée à une unité de contrôle 20. Si la température extérieure est :
   B1. Supérieure audit seuil minimal de température Tₛ, aucune action n'est lancée et on passe alors à la dernière phase E de démarrage normal du moteur 11 à l'aide de l'alterno-démarreur 14.
   B2. Inférieure ou égale au seuil minimal Tₛ de température, les phases suivantes de préparation du démarrage en mode découplé sont lancées.
      La phase de vérification B peut comprendre une étape de vérification B3 que le nettoyage n'a pas été lancé récemment. Ladite vérification peut être effectuée par exemple avec un signal temporel tᵢ inscrit dans la mémoire de l'unité de contrôle 20. Ladite unité de contrôle peut alors vérifier si l'écart de temps entre le signal temporel et l'instant de vérification (t -tᵢ) est supérieur à un seuil de temps fixé T₁ qui peut être de l'ordre de quelques minutes. Si l'écart est inférieur audit seuil de temps T₁, il n'est pas nécessaire d'effectuer à nouveau les phases de préparation de démarrage suivantes et donc de passer à la phase E de démarrage en condition normale avec l'aide de l'alterno-démarreur 14 en remplacement d'un démarreur.
c. Une phase de nettoyage C de la courroie représentée en figure 3. Cette phase comprend les étapes suivantes représentées en figure 3 :
   C1. Désaccouplement de la première poulie. Ladite première poulie n'est plus alors reliée à l'arbre 11 d'entrainement du moteur et elle ne présente plus de résistance à l'entrainement par la courroie.
   C2. Démarrage de l'alterno-démarreur en mode moteur. Ledit alterno-démarreur est alors apte à entrainer en rotation la courroie 17 et la première poulie 19 qui ne présente pas de résistance à la rotation.
   C3. Fonctionnement de l'alterno-démarreur en mode moteur pendant une durée Dt fixée. Ladite durée peut varier de quelques secondes à une minute et peut être fixée suite à des tests de validation. La rotation de la poulie de l'alterno-démarreur peut par exemple être à la vitesse maximale ou de l'ordre de 10000 tours/minute. La courroie lors de son déplacement est débarrassée des impuretés que sont les poussières, la glace ou le givre, et elle est amenée en température par échauffement avec le contact des poulies. C4. Affichage au tableau de bord d'un signal de préparation au démarrage. Ce signal peut être un led allumé au tableau de bord du conducteur.
   C5. La phase de nettoyage prend fin. Un signal temporel tᵢ₊₁ est alors inscrit dans la mémoire de l'unité de contrôle pour remplacer éventuellement la valeur précédente de signal temporel.
d. Une phase de temporisation D selon la figure 4, qui comprend les séquences suivantes :
   D1. Arrêt du fonctionnement de l'alterno-démarreur 14.
   D2. Ré-accouplement de la première poulie de l'arbre du vilebrequin. Ledit ré accouplement est de façon préférentielle effectué lorsque les éléments sont immobilisés.
   D3. Une procédure d'information du conducteur par l'affichage au tableau de bord d'un signal de vérification de la préparation au démarrage. A l'extinction du signal, le conducteur peut démarrer normalement le moteur ou le moteur peut être démarré automatiquement, grâce à l'alterno-démarreur, si le signal de commande de démarrage a été donné lors de phase A. La procédure d'information peut être lancée au début de la phase D.
e. La phase E correspond au démarrage en situation normale à l'aide de l'alterno-démarreur à la place d'un démarreur.

La stratégie de démarrage selon l'invention permet d'assurer un démarrage du bloc moteur thermique à l'aide de l'alterno-démarreur dans de bonnes conditions, la courroie étant débarrassée des impuretés que sont les poussières, le givres ou la glace et elle est amenée à une température de fonctionnement suffisamment haute par rapport à la température extérieure du véhicule.

Comme il va de soi, l'invention ne se limite pas aux seules formes d'exécution de cette prise, décrites ci-dessus à titre d'exemples, elle en embrasse au contraire toutes les variantes telles que définies par les revendications suivantes. C'est ainsi notamment que le système de couplage/découplage peut être différent de celui présenté dans cette description sans restreindre la portée de l'invention.

C'est ainsi que le fonctionnement du système de couplage/découplage peut être différent de celui présenté dans cette description sans restreindre la portée de l'invention telle que définie par les revendications suivantes.

Par exemple, le ré-accouplement de l'ensemble première poulie avec l'arbre d'entrainement du moteur peut être effectué sans arrêter l'alterno-démarreur.

## Revendications

1. Stratégie de démarrage d'un groupe motopropulseur (10) de véhicule automobile comprenant un moteur (11) à combustion interne équipé d'un arbre d'entraînement (12) s'étendant selon un axe longitudinal (X), un alterno-démarreur (14), une première poulie (15, 19) apte à être entrainée en rotation par l'arbre d'entraînement, une deuxième poulie (16) fixée solidaire à un arbre de l'alterno-démarreur , une courroie (17) entourant lesdites deux poulies, et un système de couplage/découplage (18) entre la première poulie (19) et l'arbre d'entrainement du moteur (12), ladite stratégie de démarrage comprenant une procédure de préparation (30) de ladite courroie (17) par temps froids, précédant une phase de démarrage (E) du moteur (11) à l'aide de l'alterno-démarreur (14), **caractérisée en ce que** la procédure de préparation comprend une phase de nettoyage (C) de la courroie (17) qui comporte :
+ une étape de désaccouplement (C1) de la première poulie (19) de l'arbre d'entrainement (12) du moteur pour ne pas présenter de résistance à la rotation,
+ une étape de démarrage (C2) de l'alterno-démarreur en mode moteur suivie d'une étape de fonctionnement (C3) de l'alterno-démarreur (14) en mode moteur pendant une durée fixée (Dt) pour entrainer la courroie (17) et la première poulie (19).

2. Stratégie de démarrage selon la revendication 1, **caractérisée en ce que** la stratégie comprend une phase de vérification (B) de conditions de déclenchement de la procédure de préparation (30), lesdites conditions de déclenchement comprennent une mesure de température inférieure à un seuil de température (Ts) et une mesure d'un écart de temps avec le dernier nettoyage de la courroie supérieur à un seuil de temps (T₁).

3. Stratégie de démarrage selon l'une quelconque des revendications 1 ou 2, **caractérisée en ce que** la procédure de préparation (30) comprend une phase de temporisation (D) suivant la phase de nettoyage (C).

4. Stratégie de démarrage selon la revendication 3, **caractérisée en ce que** la phase de temporisation (D) comprend un accouplement de la première poulie (19) avec l'arbre d'entrainement (12) du moteur.

5. Stratégie de démarrage selon l'une quelconque des revendications 3 ou 4, **caractérisée en ce que** la phase de temporisation comprend une procédure d'information (D3) du conducteur.

6. Stratégie de démarrage selon l'une quelconque des revendications 3 à 5, **caractérisée en ce que** la phase de temporisation (D) précède une phase de démarrage (E) du moteur grâce à l'alterno-démarreur.

7. Groupe motopropulseur (10) de véhicule automobile comprenant un moteur (11) à combustion interne équipé d'un arbre d'entraînement (12) s'étendant selon un axe longitudinal (X), un alterno-démarreur (14), une première poulie apte à être entrainée par l'arbre d'entraînement, une deuxième poulie (16) fixée solidaire à un arbre de l'alterno-démarreur (14), une courroie (17) entourant lesdites poulies, et un système de couplage/découplage (18) entre la première poulie (19) et l'arbre d'entrainement (12), **caractérisé en ce que** le démarrage dudit moteur suit une stratégie selon l'une quelconque des revendications de 1 à 6.

8. Groupe motopropulseur (10) selon la revendication 7, **caractérisé en ce que** le système de couplage/découplage comprend la première poulie débrayable (19).

9. Groupe motopropulseur (10) selon la revendication 7 ou 8, **caractérisé en ce que** la première poulie (19) est tenue à l'extrémité d'un arbre solidaire en rotation de l'arbre d'entrainement (12) et qui porte une dent.

10. Groupe motopropulseur (10) selon la revendication 8 ou 9, **caractérisé en ce que** la première poulie débrayable (19) est fixée dans le prolongement et à une extrémité de l'arbre d'entrainement (12).

## Patentansprüche

1. Anlassstrategie eines Antriebsstrangs (10) eines Kraftfahrzeugs, welcher einen Verbrennungsmotor (11), der mit einer sich entlang einer Längsachse (X) erstreckenden Antriebswelle (12) ausgestattet ist, einen Startergenerator (14), eine erste Riemenscheibe (15, 19), die von der Antriebswelle drehend antreibbar ist, eine feste zweite Riemenscheibe (16), die mit einer Welle des Startergenerators fest verbunden ist, einen Riemen (17), der die zwei Riemenscheiben umgibt, und ein System zur Kopplung/Entkopplung (18) zwischen der ersten Riemenscheibe (19) und der Antriebswelle (12) des Motors umfasst, wobei die Anlassstrategie eine Verfahrensweise zur Vorbereitung (30) des Riemens (17) bei kaltem Wetter umfasst, welche einer Phase des Anlassens (E) des Motors (11) mithilfe des Startergenerators (14) vorangeht,
**dadurch gekennzeichnet, dass** die Verfahrensweise zur Vorbereitung eine Phase der Reinigung (C) des Riemens (17) umfasst, welche aufweist:
+ einen Schritt der Abkopplung (C1) der ersten Riemenscheibe (19) von der Antriebswelle (12) des Motors, damit sie keinen Drehwiderstand aufweist,
+ einen Schritt des Anlassens (C2) des Startergenerators im Motorbetrieb, gefolgt von einem Schritt des Betriebs (C3) des Startergenerators (14) im Motorbetrieb während einer festen Dauer (Dt), um den Riemen (17) und die erste Riemenscheibe (19) anzutreiben.

2. Anlassstrategie nach Anspruch 1, **dadurch gekennzeichnet, dass** die Strategie eine Phase der Überprüfung (B) von Bedingungen für die Auslösung der Verfahrensweise zur Vorbereitung (30) umfasst, wobei die Bedingungen für die Auslösung einen Temperaturmesswert, der niedriger als ein Temperaturschwellenwert (Ts) ist, und einen Messwert eines zeitlichen Abstands seit der letzten Reinigung des Riemens, der größer als ein Zeitschwellenwert (T₁) ist, umfassen.

3. Anlassstrategie nach einem der Ansprüche 1 oder 2, **dadurch gekennzeichnet, dass** die Verfahrensweise zur Vorbereitung (30) eine Verzögerungsphase (D) umfasst, die auf die Reinigungsphase (C) folgt.

4. Anlassstrategie nach Anspruch 3, **dadurch gekennzeichnet, dass** die Verzögerungsphase (D) eine Kopplung der ersten Riemenscheibe (19) mit der Antriebswelle (12) des Motors umfasst.

5. Anlassstrategie nach einem der Ansprüche 3 oder 4, **dadurch gekennzeichnet, dass** die Verzögerungsphase eine Verfahrensweise der Information (D3) des Fahrers umfasst.

6. Anlassstrategie nach einem der Ansprüche 3 bis 5, **dadurch gekennzeichnet, dass** die Verzögerungsphase (D) einer Phase des Anlassens (E) des Motors mittels des Startergenerators vorangeht.

7. Antriebsstrang (10) eines Kraftfahrzeugs, welcher einen Verbrennungsmotor (11), der mit einer sich entlang einer Längsachse (X) erstreckenden Antriebswelle (12) ausgestattet ist, einen Startergenerator (14), eine erste Riemenscheibe, die von der Antriebswelle antreibbar ist, eine feste zweite Riemenscheibe (16), die mit einer Welle des Startergenerators (14) fest verbunden ist, einen Riemen (17), der die zwei Riemenscheiben umgibt, und ein System zur Kopplung/Entkopplung (18) zwischen der ersten Riemenscheibe (19) und der Antriebswelle (12) umfasst, **dadurch gekennzeichnet, dass** das Anlassen des Motors einer Strategie nach einem der Ansprüche 1 bis 6 folgt.

8. Antriebsstrang (10) nach Anspruch 7, **dadurch gekennzeichnet, dass** das System zur Kopplung/Entkopplung die auskuppelbare erste Riemenscheibe (19) umfasst.

9. Antriebsstrang (10) nach Anspruch 7 oder 8, **dadurch gekennzeichnet, dass** die erste Riemenscheibe (19) am Ende einer Welle gehalten wird, die mit der Antriebswelle (12) drehfest verbunden ist und die einen Zahn trägt.

10. Antriebsstrang (10) nach Anspruch 8 oder 9, **dadurch gekennzeichnet, dass** die auskuppelbare erste Riemenscheibe (19) in der Verlängerung und an einem Ende der Antriebswelle (12) befestigt ist.

## Claims

1. Starting strategy for a power train (10) of a motor vehicle including an internal combustion engine (11) fitted with a drive shaft (12) extending along a longitudinal axis (X), an alternator-starter (14), a first pulley (15, 19) that is designed to be driven in rotation by the drive shaft, a second pulley (16) that is rigidly connected to a shaft of the alternator-starter, a belt (17) encircling said two pulleys, and a coupling/decoupling system (18) between the first pulley (19) and the drive shaft of the engine (12), said starting strategy including a preparation procedure (30) for said belt (17) in cold weather, preceding a starting phase (E) for the engine (11) by means of the alternator-starter (14),
**characterized in that** the preparation procedure includes a cleaning phase (C) of the belt (17) that includes:
+ a step of decoupling (C1) the first pulley (19) from the drive shaft (12) of the engine to prevent any resistance to rotation,
+ a step of starting (C2) the alternator-starter in engine mode followed by a step of operating (C3) the alternator-starter (14) in engine mode for a set duration (Dt) to drive the belt (17) and the first pulley (19).

2. Starting strategy according to Claim 1, **characterized in that** the strategy includes a verification phase (B) for the trigger conditions for the preparation procedure (30), said trigger conditions including a temperature measurement below a temperature threshold (Ts) and measurement of a time since the last cleaning of the belt above a time threshold (T₁).

3. Starting strategy according to either one of Claims 1 and 2, **characterized in that** the preparation procedure (30) includes a timing phase (D) after the cleaning phase (C) .

4. Starting strategy according to Claim 3, **characterized in that** the timing phase (D) includes a coupling of the first pulley (19) with the drive shaft (12) of the engine.

5. Starting strategy according to either one of Claims 3 and 4, **characterized in that** the timing phase includes a driver information procedure (D3).

6. Starting strategy according to any one of Claims 3 to 5, **characterized in that** the timing phase (D) precedes a starting phase (E) of the engine using the alternator-starter.

7. Power train (10) of a motor vehicle including an internal combustion engine (11) fitted with a drive shaft (12) extending along a longitudinal axis (X), an alternator-starter (14), a first pulley that is designed to be driven by the drive shaft, a second pulley (16) that is rigidly connected to a shaft of the alternator-starter (14), a belt (17) encircling said pulleys, and a coupling/decoupling system (18) between the first pulley (19) and the drive shaft (12), **characterized in that** said engine is started after a strategy according to any one of Claims 1 to 6.

8. Power train (10) according to Claim 7, **characterized in that** the coupling/decoupling system includes the first switchable pulley (19).

9. Power train (10) according to Claim 7 or 8, **characterized in that** the first pulley (19) is held at the end of a shaft that is constrained to rotate with the drive shaft (12) and that has a tooth.

10. Power train (10) according to Claim 8 or 9, **characterized in that** the first switchable pulley (19) is attached to and extends one end of the drive shaft (12) .
